# EUROPEAN PATENT SPECIFICATION

(11) **EP 4 479 287 B1**
(45) Date of publication and mention of the grant of the patent: **25.02.2026**
(21) Application number: 23701617.5
(22) Date of filing: 02.01.2023
(51) Int. Cl.: B62D 5/00

(54) **A STEERING SYSTEM, A METHOD FOR PROVIDING STEERING FEEDBACK IN SUCH A SYSTEM AND A STEERING SYSTEM FEEDBACK ARRANGEMENT**
LENKSYSTEM, VERFAHREN ZUR BEREITSTELLUNG VON LENKRÜCKMELDUNG IN EINEM DERARTIGEN SYSTEM UND LENKSYSTEMRÜCKKOPPLUNGSANORDNUNG
SYSTÈME DE DIRECTION, PROCÉDÉ DE FOURNITURE DE RÉTROACTION DE DIRECTION DANS UN TEL SYSTÈME ET AGENCEMENT DE RÉTROACTION DE SYSTÈME DE DIRECTION

(30) Priority: 14.02.2022 SE 2250146
(43) Date of publication of application: 25.12.2024
(73) Proprietor: Sentient AB, 417 55 Göteborg (SE)
(72) Inventor: MARKSTRÖM, Lars, 426 68 Västra Frölunda (SE); CYREN, Bengt, 472 32 SVANESUND (SE)
(74) Representative: Bergentall, Annika Maria
(86) International application number: PCT/SE2023/050003
(87) International publication number: WO 2023/153973

(56) References cited:
- DE-C1- 19 539 101
- FR-A1- 2 922 848

## Description

### TECHNICAL FIELD

The present invention relates to a steering system having the features of the first part of claim 1. The invention also relates to a steering system feedback arrangement and to a method for providing steering feedback in a steering system having the features of the first part of claims 14 and 17 respectively, and to a vehicle comprising such a steering system.

### BACKGROUND

Traditionally the steering system of e.g. a road vehicle comprises a mechanical connection between the steering wheel and the steerable wheels. Other steering systems, not having a mechanical connection, are also known, which often are referred to as SbW, steer-by-wire, systems. In a SbW, steer-by-wire, system, one or more sensors register physical properties, e. g. forces and movements of the steering wheel or other steering input device, such as a yoke or joystick or other means, and generate signals. These signals of the registered physical properties can be provided to an ECU, Electronic Control Unit, and transformed by the ECU into a desired action to be provided on the steerable wheels. A power assisted steering actuator that is electrically connected to the ECU and mechanically linked to the steerable wheels will then execute the desired action and apply desired forces to the said steerable wheels.

The feedback to the driver is typically provided by means of an electric motor, creating forces and/or movements to the steering wheel, otherwise transmitted via the mechanical connection.

SbW systems offer many advantages compared to conventional mechanical steering, such as allowing energy absorption in collisions, flexible location of a steering wheel, handling of left- and right-hand drive variants, removable steering wheel, variations in steering input devices, autonomous drive and advanced driving aid being some examples. Also, SbW systems offer several opportunities for the driving experience itself, e.g. variable steering ratio and immunity to road disturbances.

To obtain a desired feedback force, a feedback actuator, typically an electric motor, must be able to deliver a certain torque, either directly or via a gear. It is very important that the performance of the motor is sufficient, otherwise it is not possible to create a good driving experience. On the other hand, a high performance of an electric motor generally is associated with significant penalties such as cost, weight, volume and use of raw materials like copper and rare earth metals. The latter materials are often mined and having to rely on such raw materials can have a severe negative impact on the environment and constitutes a disadvantage as far as the goal of allowing a sustainable production is concerned.

Since the feedback force is generated solely by an electric motor, the use of electric energy is required, which is undesired, especially in an electric car where every saving in electric consumption is preferred in favour of a greater range.

If there is a failure in the steering system, a desired functionality, or even a legal requirement, is that the vehicle still shall be controllable. An example of providing such a functionality is through the steering having a self-centring effect. When the steering wheel is connected mechanically to the steerable wheels of the vehicle, the self-centring forces are transmitted from the tyres via the suspension geometry to the steering wheel. When the force in the steering wheel is solely dependent on a feedback motor, the self-centring effect will be lost if the motor fails.

The use of an electric motor is not optimal for creating all properties needed for a good steering feel. One property needed for a good steering feel is friction feel, especially for slow, zero and reversing angular speed of the motor and hence, the steering wheel.

A certain torque output from the electric motor is needed. One way of reducing the torque requirement of the electric motor is to use a gear to increase the produced torque. This will make the motor to spin at higher speeds which can cause steering feel defects usually referred to as inertia feel. Another disadvantage of using a gear is that gears often are prone to lash and/or friction which in turn also can affect the steering feel in an adverse manner. In addition, through the use of a gear, the complexity will be enhanced which increases the risk of failures and raises costs, making the use of a smaller motor not to be obviously favourable. Also, even though a gear itself can reduce the torque output needed from the motor, the energy consumption will not be lowered since the motor instead must run at higher revolutions.

There is technology available for permanent magnet free electric motors, such as reluctance motors and inductions motors. However, these are typically plagued with high torque ripple and/or require much space, a large volume, and they are thus not suited for automotive steering applications.

So far, cars with SbW are equipped with a mechanical backup in the case of failure. An intermediate shaft is then required, resulting in that the location of the steering wheel is not as flexible as would be desirable, it cannot be removed, it is unnecessarily complicated to handle left- and right-hand drive variants and it also is an obstacle in enhancing energy absorption in collisions, and does not allow for variations in steering input devices.

Further, for a good steering feel a certain amount of friction feel is desirable. The control of electric motors for creating a friction feel, however, can be cumbersome, especially for slow, zero and reversing angular speed of the motor and, hence, the steering wheel. To reduce the need for friction feel created by the motor it is possible to create the steering feel using mechanical components. Such solutions are known from other steering applications with a specially designed axial bearing where a certain friction level is provided.

Cars with SbW having a system relying on an electric motor for feedback are well known but all so far known solutions suffer from one or more of the above mentioned disadvantages.

US20180319422 shows a power assisted steering system for a vehicle with a feedback arrangement comprising an electric feedback motor and a mechanical feedback arrangement comprising a preloaded belt. However, the solution suffers from several drawbacks, it is space demanding, complex and sensitive. Also, the lifetime is limited through the use of a belt comprising a pre-loaded cable pull. It also does not offer a sufficient steering safety.

Furthermore, FR2922848 discloses the features of the preambles of independent claims 1 and 14.

All so far known steering systems with feedback arrangements are associated with drawbacks and suffer from several shortcomings.

### SUMMARY

It is therefore an object of the present invention to provide a steering system, a steering system feedback arrangement and a method in a steering system respectively through which one or more of the above-mentioned problems can be solved and through which one or more of the shortcomings can be overcome.

It is an object of the present invention to provide an improved power assisted wired or wireless steering system, particularly an improved power assisted Steer-by-Wire (SbW) steering system.

It is a particularly an object to provide a steering system for providing steering feedback in a vehicle steering system through which steering safety can be enhanced.

More particularly it is an object to provide a steering system through which steering safety can be upheld also when there is a loss in steering assistance or a failure in the steering system, and particularly steering facilitated in case of a loss in steering assistance.

Further it is a particular object to provide a steering system through which a desired steering feel can be provided, and most particularly which is capable of providing more properties needed for constituting a good steering feel than so far known steering systems, particularly friction feel, also under varying circumstances.

Another particular object is to provide a vehicle steering system, a vehicle steering method and a vehicle steering system arrangement respectively through which steering safety as well as steering feel can be upheld also when there is a steering failure, e.g. loss in steering assistance.

A most particular object is to provide a SbW steering system through which one or more of the above-mentioned objects can be achieved.

It is particularly an object to provide a steering system arrangement providing feedback in a wired steering system, e.g. a SbW steering system, or in a wireless steering system, and through which one or more of the above mentioned objects can be achieved.

Yet another particular object is to provide a vehicle steering system and a steering system arrangement respectively which is cheap and easy to implement and fabricate.

Another particular object is to provide a vehicle steering system and a steering system arrangement respectively which is compact, reliable and robust and which has a long lifetime.

Yet another particular object is to provide a vehicle steering system and a steering system arrangement respectively which is environmental friendly and allows for a sustainable production.

Another particular object is to provide a vehicle steering system and a steering system arrangement respectively through which energy consumption for steering (feedback) is low, and is reduced compared to for known steering methods, allowing saving in electric consumption.

Still another object is to provide a vehicle steering system and a steering system arrangement respectively through which steering safety and steering feel can be improved in a wired, particularly a SbW steering system, or a wireless steering system without requiring a large volume, adding in weight or in cumbersomeness.

Still further it is a particular object is to provide a vehicle steering method and a vehicle steering system arrangement respectively which is reliable, safe and at the same time provides a good steering feel and steering response (vehicle reaction to steering input) under varying conditions. Most particularly it is an object to provide for improved steering feedback in a steering system, particularly a steer-by-wire (SbW) steering system.

It is also an object of the present invention to provide a vehicle with a steering system through which one or more of the above mentioned objects are achieved.

Therefore a steering system feedback arrangement as initially referred to is provided which has the characterizing features of claim 1. A steering system and a method in a steering system respectively as initially referred to having the characterizing features of the respective independent claims 4 and 14 are therefore also provided as well as a vehicle comprising such a steering system.

Advantageous embodiments are given by the respective appended dependent claims and are described in the detailed description respectively.

It will be appreciated that features of the invention are susceptible to being combined in any combination without departing from the scope of the invention as defined by the accompanying claims.

### BRIEF DESCRIPTION OF THE DRAWINGS

The invention will in the following be further described, in a non-limiting manner, and with reference to the accompanying drawings, in which:
Fig. 1. very schematically illustrates a vehicle steering system arrangement with a feedback arrangement according to one embodiment not forming part of the present invention,
Fig. 2. is a more detailed view of the feedback arrangement comprising an electric feedback motor and a mechanical feedback arrangement as shown in Fig.1, but not forming part of the present invention,
Fig. 3. , not forming part of the present invention, schematically illustrates a front to back view of a mechanical feedback arrangement of a feedback arrangement as shown in Fig.1,
Fig. 4. schematically illustrates an alternative embodiment of a mechanical feedback arrangement of a feedback arrangement not forming part of the present invention,
Fig.5 schematically illustrates still another alternative of a mechanical feedback arrangement according to the present invention, and
Fig.6 schematically illustrates a particular implementation of a mechanical feedback arrangement according to the present invention.

### DEFINITIONS

For the purposes of describing the present invention, and to facilitate the understanding thereof, the following definitions are given, some of which will be relied upon in the detailed description of advantageous embodiments:
Torque and/or angle reference control (TAC) comprises steering feel control (SFC) and/or steering position control (SPC), respectively. For the steering feel control, it is the control of the steering-wheel torque that the driver feels that is the subject matter, and in steering position control, it is the control of the road-wheel angles, and specifically for a front-wheel steered vehicle, the control of the front axle road-wheel angle, here referred to as the steering angle (see the definition below).

A steering angle is an angle in the steering system that influences the lateral acceleration or curvature of the vehicle, measured somewhere in the steering system, where such steering angles can be:
- The front-wheel angle and in the case for e.g. Ackermann steering, the steering angle is defined as the mean value of the angles of the two front wheels.
- The articulation angle of an articulated vehicle.
- The rear-wheel steering angle in the case of a rear-wheel steered vehicle.
- A combination of the front-wheel angle and the rear-wheel angle in the case of an all-wheel steered vehicle.

Power steering will also provide a means for to modulate steering feedback.

A steering position actuator is an actuator which can be used for SPC, i.e. to influence one or more of the steering angle, such as the front wheel steering angle, rear wheel steering angle, the individual steering angles of the wheels, the axle braking torque or force, the wheel braking torque or force, the driving torque or force on the individual axles, the driving torque or force on the individual wheels, the camber angle on each axle, or the camber angle on each wheel.

A specific type of steering position actuator is an angle overlay actuator. An angle overlay actuator is an actuator that is used to achieve a relative angle somewhere in the steering column. Two hardware concepts are dominating the angle overlay actuator scene, namely planetary gears (such as in the BMW concept for "Front Active Steering") and harmonic drives (such as in the Audi variable steering gear ratio).

A state is defined as a translational or rotational position, velocity or acceleration, or from these before-mentioned states derived states such as e.g. a vehicle slip angle, which is the angle between the vehicle local x-axis and the vehicle speed vector.

For SFC, Hydraulic Power Steering (HPS) has been widely used, and now Electric Power Steering (EPS) is used. In order to give the driver feedback in the SFC, the EPS is used, and will in this document be called a feedback torque actuator or only torque actuator.

Heavy vehicles and farming vehicles such as e.g. tractors require great steering assistance levels. Therefore, the assistance actuators of today are predominantly hydraulic assistance driven (because the fact that hydraulics has high power density). That means that if one would like greater controllability than standard hydraulic assistance valves result in, for functions such as e.g. Lane Keeping Aid (LKA), it is possible to add an EPS actuator above the HPS actuator, i.e. towards the steering wheel side. Therefore, for farming equipment and heavy vehicles, a combination of HPS and EPS is now emerging, where the EPS is mounted on the steering wheel side of the HPS system. The HPS actuator is used to achieve a torque reduction, an assistance, and is therefore called hydraulic assistance actuator.

An actuator is a mechanism or system that is operated mechanically or by an ECU and converts a source of energy, typically electric current, hydraulic fluid pressure, or pneumatic pressure, into a motion, force or torque.

Variable Gear Ratio (VGR) or variable steering gear ratio is a function to control the steering gear in such a way that the ratio between the steering wheel and the road wheels follows a defined function, usually speed dependent, but other functions are also possible

Also other functions, such as e.g. safety functions can benefit from an angle overlay actuator. Such safety functions are e.g. oversteer compensation, where the steering angle is controlled in such a way that the oversteering is reduced by a counter steering, or understeer compensation, where the function controls the steering angle in such a way that the tyre-to-road friction is used in an optimal way, reducing otherwise over-exaggerated steering angles. By these examples of steering angle control, the steering wheel does not necessarily need to move, as the angle overlay actuator adds the angle necessary to move the steering angle without moving the steering-wheel angle.

A torsion-bar torque is a torque measured by the use of a sensor that is sensitive to a twist of a specific torsion bar that is mounted somewhere in the steering column.

A steering-wheel torque is the torque resulting from the force applied by the driver to the steering wheel. This steering-wheel torque is normally approximated by the torsion-bar torque.

A driver torque is equal to the steering-wheel torque.

A signal bus is a transmission path on which signals can be read and/or transmitted.

An input signal can for example be the measure of a torque resulting from the force applied by the driver via the steering wheel, measured somewhere between the steering wheel and the wheel, or a signal from which this quantity can be derived from.

An ECU is an electric control unit that is used to read analogue sensor signals and digital signals, that can come over e.g. a signal bus, perform any type of computations, such as e.g. perform a control task and actuate actuators, either via a sent analogue or digital signal or by directly controlling e.g. an electric motor from a motor control stage.

Controllability describes the ability of an external input to move the internal state, an actual value, of a system from any initial state to an arbitrary other final state, a target value, in a finite time interval, thus minimising the difference between the target value and the actual value, i.e. the control error.

A lateral acceleration feedback torque is a torque felt by the driver that corresponds to the lateral acceleration of the vehicle.

The lateral acceleration can be calculated from a vehicle model, which uses vehicle speed and steering angle as input. The lateral acceleration feedback torque, in turn, is a function (e.g. calculated, obtained from a table or a matrix) or similar of the lateral acceleration calculated from the vehicle model.

A tyre friction torque is the torque generated by friction between the tyres and the road or a model of this friction. When turning a wheel, the friction between the tyre and road must be overcome, being the tyre friction torque.

The mathematical model of the tyre friction torque is a model of an angle or angular speed driven hysteresis. The mathematical model of the tyre also contains a relaxation part such that as the tyre rolls, the torque of the hysteresis will have a relaxation length so that the hysteresis torque decreases with the rolling length of the tyre. The relaxation can preferably be the well-known halflife exponential decay function. The model of the tyre friction is the combination of the hysteresis and the relaxation so that e.g. an increase owing to the hysteresis torque can happen at the same time as the torque decrease owing to the relaxation. The resulting torque of the model is the sum of the two parts.

A steering system friction or a friction torque is the friction of the parts of the components of the steering system or a model of this friction.

The mathematical model of the steering system friction torque is a model of an angle or angular speed driven hysteresis. The maximum torque in the hysteresis can be shaped by a function so that the maximum torque is different on centre compared to off centre.

A damping torque occurs owing to damping of the tyres and the steering system or a model of this damping.

A mathematical model of the damping torque consists of some damping constant times an angular speed or translational speed, such as e.g. the rack velocity, measured somewhere in the linkage between the road wheels and the steering wheel. The damping constant can be such that the damping has a blow-off, such that the damping constant decreases for great angular or translational speeds. The damping constant can be vehicle speed dependent as well as different for steering outwards compared to inwards. The damping constant can also be a function of the steering-wheel or torsion-bar torque.

A returnability torque comes from the geometry and components of the steering system or a model of the steering system.

A returnability torque is a vehicle speed dependent and steering-wheel angle dependent torque.

The above mentioned torque contributions can all be vehicle speed dependent. The torque contributions can also be calculated via mathematical models or sensed via sensors in the vehicle or steering system.

A compensation torque is the sum of the above-mentioned tyre friction torque, the friction torque, the damping torque and the returnability torque. The parts of the compensation torque are calculated from mathematical models of the different torque parts.

A reference generator concept for steering feel is a closed loop control method where first a reference or target value is calculated and then the steering assistance is controlled to minimize the error between the reference or target value and a corresponding measured value. Reference generator concepts for steering can be of two kinds, namely torque reference generator concepts and angle reference generator concepts.

A torque reference generator is used in a steering feel control concept where the steering-wheel torque is calculated in a reference generator, giving a reference steering-wheel torque, this reference steering-wheel torque is then compared to a measured steering-wheel torque and the difference, forming a steering wheel torque error, is fed to a controller so that the steering wheel torque error can be minimized. The reference steering-wheel torque is in other words used to control, by the use of closed loop control, the feedback torque actuator.

A target steering-wheel torque is the sum of the lateral acceleration feedback torque, the above-mentioned tyre friction torque, the friction torque, the damping torque and the returnability torque.

An angle reference generator is used in a steering feel control concept where the steering-wheel angle is calculated in a reference generator, giving a reference steering-wheel angle; this reference steering-wheel angle (reference feedback torque actuator angle) is then compared to a measured steering-wheel angle and the difference, a steering-wheel angle error, is fed to a controller so that this error can be minimised. In other words the reference torque actuator angle can be said to be used to control the feedback torque actuator to this reference angle.

A target steering angle, in the angle reference generator, is based on the equation of the target steering-wheel torque, where the target steering-wheel torque is the sum of the lateral acceleration feedback torque, the above-mentioned tyre friction torque, the friction torque, the damping torque and the returnability torque. If the target steering-wheel torque, in this equation is changed to the sensed or estimated driver torque, the steering angle can be derived out of this steering angle dependent equation. This derived steering angle is the target steering angle of the angle reference generator.

The parts of the target steering-wheel torque are calculated from mathematical models of the different torque parts.

A target steering-wheel angle can be calculated from the equation of steering feel, where the torsion-bar torque should be equal to the target steering-wheel torque as described above. Now, from this equation, a target steering-wheel angle can be calculated.

The parts of the target steering-wheel angle are calculated from mathematical models of the different torque parts.

A vehicle state controller, is defined as a dynamic function for achieving a target state in a vehicle in a controlled manner. That is, to minimise the difference between the target state and the actual state, i.e. the control error, in a controlled way.

A PID controller is a proportional-integral-derivative controller, which is a control loop feedback mechanism widely used in industrial control systems and a variety of other applications requiring continuously modulated control. A PID controller continuously calculates an error value, *e(t),* as the difference between a target value and a measured process value and applies a correction based on proportional, integral, and derivative terms (denoted P, I, and D respectively) which give their name to the controller. In practical terms it automatically applies accurate and responsive correction to a control function. An everyday example is the cruise control on a road vehicle; where external influences such as gradients would cause speed changes, and the driver has the ability to alter the desired set speed. The PID algorithm restores the actual speed to the desired speed in the optimum way, without delay or overshoot, by controlling the power output of the vehicle's engine. A PID controller, the I-part of a PID controller can sometimes suffer from integral windup.

A vehicle state actuator, is an actuator that when actuated influences one or several vehicle states. Vehicle state actuators are brakes, engine, controllable four-wheel-drive clutches, controllable differentials, active dampers, electric or hydraulic wheel motors and electrically or hydraulically driven axles.

A target value, reference value or request is a set point for the actuator that is achieved by the use of either a closed loop controller and/or a feed-forward controller.

A vehicle model is a mathematical model that transforms a road-wheel angle and a vehicle speed to a number of vehicle yaw and/or lateral states, namely vehicle yaw rate and acceleration, vehicle lateral speed and acceleration and vehicle body sideslip angle.

Transformation is defined as a mathematical function or lookup table with one input value used to produce one output value. That means that a transformation can be used, with its tuneable parameters, to create a relation between the input value and the output value with arbitrary tuneable shape. A transformation can have time-varying parameters that are even dependent on other values, a so-called gain scheduling, so that the transformation is a function with parameters that themselves are functions. An example of such a transformation is a vehicle state to driver torque relation where the relation is a vehicle speed dependent continuously rising, degressive shaped function.

A steering-wheel torque measurement is a torque measured in the steering column or in the steering wheel.

A vehicle axis and coordinate system where X is in the horizontal plane and in the forward direction of travel. Y is in the horizontal plane, perpendicular to X and point to the left. Z points upward.

### Sensors:

A Torque and Angle Sensor (TAS) is a sensor for sensing torque and angle.

An ABS sensor or wheel speed sensor is a sensor measuring wheel speed.

A rate gyro sensor measures angular speed around an axis in yaw, pitch or roll direction.

An acceleration sensor measures acceleration in longitudinal, lateral or vertical direction.

A position sensor measures the position. It can be a local, regional or worldwide coverage, generally referred to as GPS.

A brake pedal sensor indicates if the pedal is pressed.

A break pressure sensor measures the pressure in the brake system.

The term TAC (Torque and/or Angle reference generator control concept) is used for the SFC and/or for the SPC.

### DETAILED DESCRIPTION

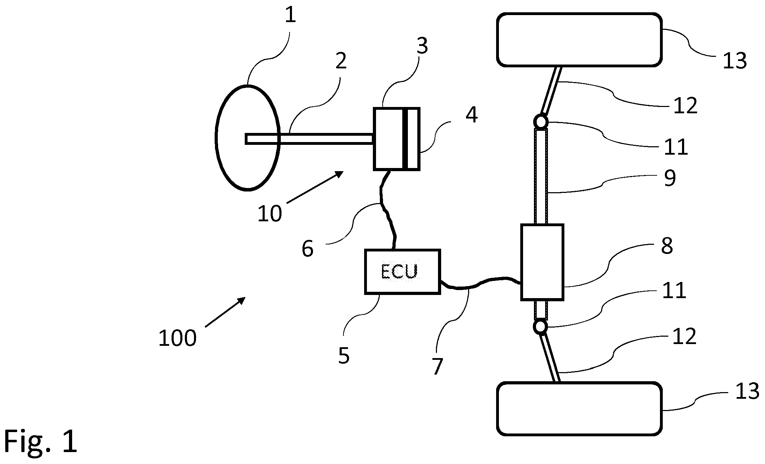

Fig. 1 is a schematic view of a power assisted Steer by Wire vehicle steering system 100 according to a first embodiment not forming part of the present invention. It comprises a steering wheel 1, a steering shaft or a steering column 2, a linkage, here comprising a steering rack 9 via ball joints 12 connected to steering rods 12,12, for steering and turning steerable elements comprising wheels 13,13 (front and/or rear road wheels). It further comprises an electrically controllable actuator 8 (also denoted an assistance actuator), e.g. comprising an electric actuator or motor or a hydraulic actuator or motor, or in general any electrically controllable actuator which in the embodiment shown in Fig.1 is provided between steerable wheels 13,13 and steering wheel 1, controllable via an Electric Control Unit, ECU, 5 and a feedback arrangement 10 comprising a feedback motor 3, here connected to the steering shaft 2, and a mechanical feedback arrangement 4.

The steering wheel 1 is connected to steering shaft 2 which in turn is connected to the electric feedback motor 3. The electric feedback motor 4 is connected to the mechanical feedback arrangement 4.

The feedback motor 3 is via electric connection 6 controlled by the ECU 5 via regulation of a current provided to the electric feedback motor 3 to provide a controlled, desired, torque to the steering wheel 1. In the shown embodiment the steering wheel 1 and the electric feedback motor 3 are directly connected, without any torque or angle sensor or any torque and angle sensor (TAS) arranged on the shaft 2 for providing a control signal to the ECU 5. In alternative embodiments a sensor (torque or angle or torque and angle sensor) may be provided for sensing torque and/or angle in the steering shaft 2, in addition to the estimation of torque provided by the electric motor, i.e. torque estimated based on currents in the electric motor, e.g. for redundancy reasons and/or further increasing torque value accuracy for improving the steering feedback control even more. As an example a torsion bar with a torque sensor may be used for measuring the driver torque, i.e. the torque caused by the force applied by the driver on the steering wheel 1, which torque is transmitted through the steering shaft 2 to the torsion bar.

The ECU 5 via connection 7 controls a current provided to the electrically controllable actuator, e.g. assistance motor, 8, and preferably receives sensor information from angle sensors (not shown), or torque and/or angle sensors; of, or in communication with, the electric assistance motor 8.

According to the present invention, the feedback arrangement 10, as referred to above, comprises a feedback motor 3 combined with a mechanical feedback arrangement 4. The mechanical feedback arrangement 4 comprises a PFFE, passive force feedback element. The mechanical feedback arrangement (PFFE) 4 may comprise any kind of spring, i.e. an element that builds up force in a direction which is opposite to the direction of movement, without any input of energy than the energy provided by the movement itself. The mechanical feedback arrangement (PFFE) 4 will generate a force in the steering wheel 1 opposite to the direction of the movement when turning away from the centre, i.e. straight ahead position. If the electric feedback motor 3 fails, the mechanical feedback arrangement (PFFE) 4 will generate a force that will try to return the steering wheel 1 to centre, i.e. normally the straight-ahead position.

The force generated by the mechanical feedback arrangement (PFFE) 4 will provide an addition of force to the force generated by an electric feedback motor 3. This means that a certain maximum amount of feedback force can be generated with a smaller electric feedback motor which is very advantageous for several reasons since less space is required, less energy will be needed which is particularly advantageous in an electric vehicle, e.g. a car, wherein every saving in electric consumption is preferred in favour of a greater range.

The electric feedback motor 3, in turn, can add or reduce forces to the mechanical feedback arrangement (PFFE) 4 to exactly shape the desired steering feedback for every situation.

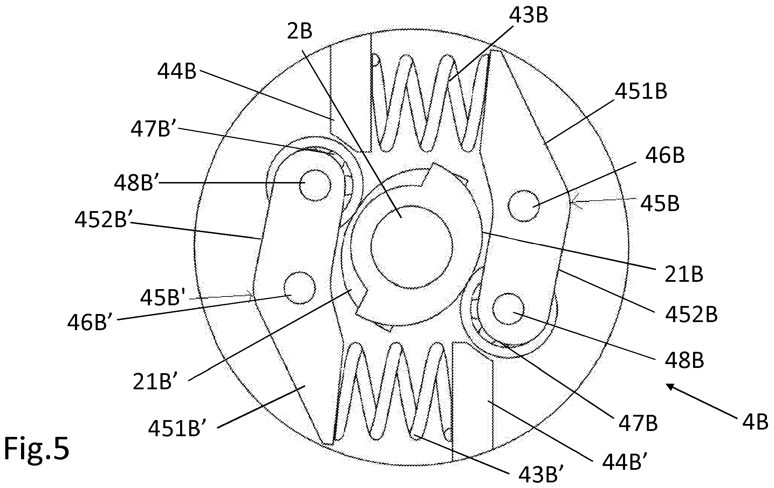

Depending on the design of the mechanical feedback arrangement (PFFE) 4 and how it interacts with the steering wheel 1, it is also, in advantageous embodiments to which the invention, however, is not restricted, possible to create a certain amount of desirable friction force. For example when the feedback force is created using cam profiles attached to, or otherwise formed in, the steering shaft 2 interacting with e.g. roller bearings 47B,47B' as in the embodiment shown in Fig.5 below, a low friction can be achieved, or when the feedback force is created using cam profiles attached to, or otherwise formed in, the steering shaft 2 interacting with sliding elements (not shown) instead of roller bearings, a higher friction can be achieved.

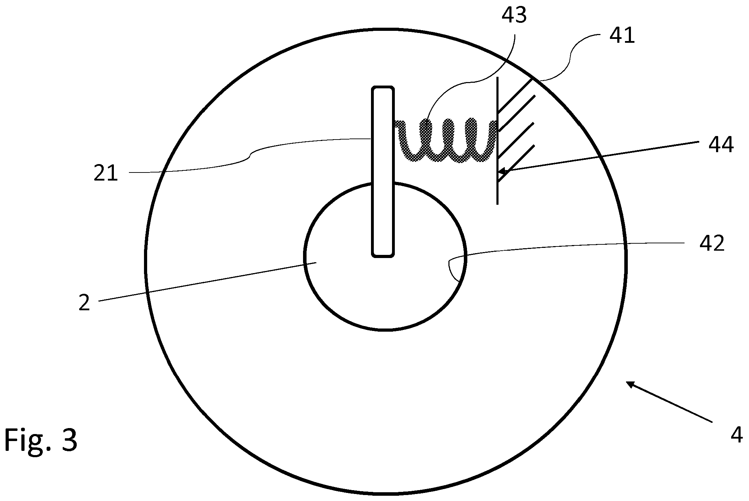

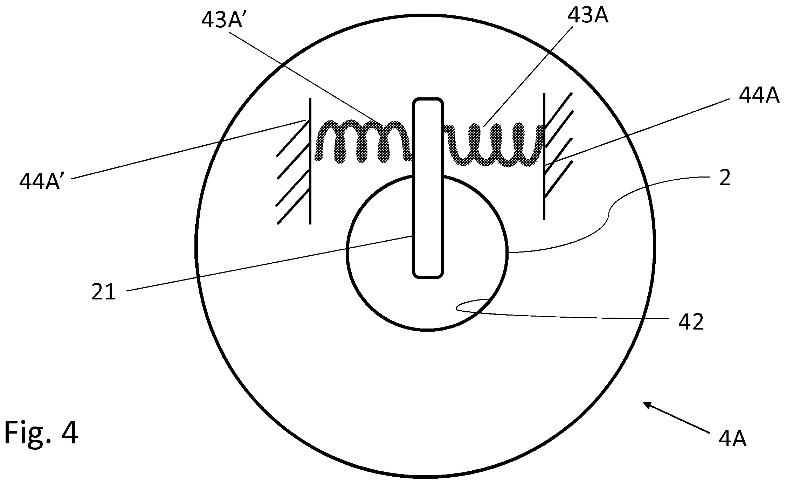

It is also possible to, relevant to embodiments , not forming part of the present invention, described below with reference e.g. to Figs. 3,4, using a lever arm 21, said lever arm 21 may be arranged to be in contact with a surface to obtain a desired friction.

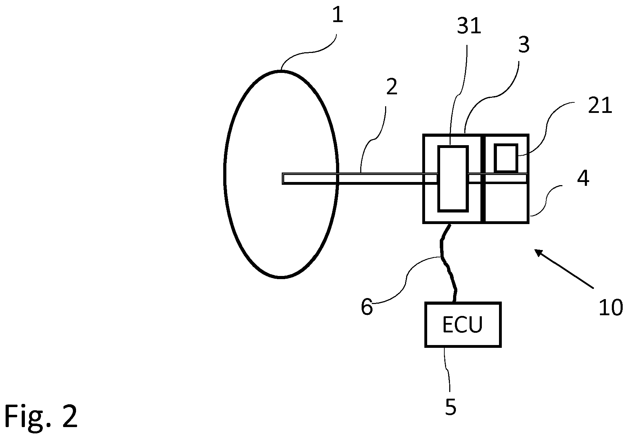

Fig. 2 is a schematic view of the feedback arrangement 10, not forming part of the present invention, shown in Fig.1 wherein the mechanical feedback arrangement 4 is connected to the electric feedback motor 3 arranged on the steering shaft 2 (to which the steering wheel 1 is connected in any conventional manner). In the shown embodiment the electric feedback motor 3 is connected to the steering shaft 2 and an electric motor rotor 31 centrally takes up the steering shaft 2 which passes through the electric motor 3 into the mechanical feedback arrangement 4. Adjacent an end portion of the steering shaft 2 distant from the steering wheel 1 an actuation element here comprising a protruding lever 21 is provided which protrudes outwards perpendicularly from the steering shaft 2 and which is taken up within, and is in mechanical engagement with an inner wall portion, flange or protrusion in an inner part of the mechanical feedback arrangement 4 as will be more thoroughly described with reference to Figs. 3 and 4.

Fig 3 is a front to back view of a first embodiment, not forming part of the present invention, of a mechanical feedback arrangement 4. The mechanical feedback arrangement 4 here comprises a mechanical feedback module 4 comprising a circular disc 41 with a central opening 42 for reception of the steering shaft 2. The steering shaft 2 comprises or is connected to lever 21 adjacent an end portion of the steering shaft 2 distant from the steering wheel 1 and protruding perpendicularly outwards from the shaft 2. The mechanical feedback arrangement 4 comprises a spring 43, here a coil spring, one end of which is adapted to be arranged on, connected to, an inner wall section or protrusion 44 of the mechanical feedback arrangement 4 inner wall, e.g. in a recess in an inner wall of the central opening 42, and the other end of which spring 43 is to be connected to or in contact with, the protruding lever 21 of the steering shaft 2. When the steering wheel 1 is turned, and thus also the steering shaft 2, the lever 21 will act on the spring 43 and either compress the spring 43 or lengthen the spring 43. The spring 43 will then generate a force urging the steering wheel 1 to return to a neutral position. The ECU 5 can, via the electric feedback motor 3, always add or subtract torque to the steering shaft 2 and thus modulate the force in the steering wheel 1.

Fig. 4 shows a second embodiment, not forming of the present invention, of a mechanical feedback arrangement 4A that can be used in a feedback arrangement e.g. in a feedback arrangement 10 as shown in Fig.1. The mechanical feedback arrangement 4A here comprises a mechanical feedback module comprising a circular disc 41A with a central opening 42A adapted for reception of a steering shaft 2 comprising or being connected to a lever 21 adjacent an end portion of the steering shaft 2 distant from the steering wheel 1 and protruding perpendicularly outwards from the shaft 2 as discussed with reference to Fig.3. The mechanical feedback arrangement 4A comprises two coil springs, a first and a second spring 43A,43A', one end of each of the first and second springs 43A,43A' being adapted to be arranged on, connected to, a respective inner wall section or protrusion 44A,44A in a recess of the mechanical feedback arrangement 4Á and the other end of each of the respective first and second springs 43A,43A' being adapted to be arranged on, connected to, or operatively connected to a respective opposite side of the protruding lever 21 of the steering shaft 2. When the steering wheel 1 is turned, and thus also the steering shaft 2, the lever 21 will act on the first and second springs 43A,43A' and either compress the first spring 43A and lengthening the second spring 43A' or lengthening the first spring 43A and compressing the other, second, spring 43A' . The first and second springs 43A,43A' will then both generate a force urging the steering wheel 1 to return to a neutral position. The ECU 5 can, via the electric feedback motor 3, always add or subtract torque to the steering shaft 2 and thus modulate the force in the steering wheel 1. An advantage of using more than one spring is that the combined feedback force can be higher, or the load of each spring can be reduced.

In still other embodiments, not forming part of the present invention, other types of springs can be used in the mechanical feedback arrangement, e.g. leaf springs, washer shaped springs or any other type of spring being elastic and providing a force when the spring element is deformed. Thus, the coil springs shown in Figs.3 and 4 could be replaced with any other appropriate spring elements.

A spring (or springs) (or more generally spring element(s)) may be made of steel or any other appropriate metal or metal composition. Alternatively the spring element(s) may be made of an elastic material such as rubber or an elastomer. Still further the, or each, spring element may be a gas spring.

Fig.5 schematically illustrates an embodiment, forming part of the present invention, in which the steering shaft 2B is provided with two actuation elements comprising cam profiles or cam surfaces 21B,21B', e.g. attached to, or integral with, the steering shaft 2B, wherein one cam profile 21B' is slightly behind the other cam profile 21B. The feedback arrangement here comprises, in addition to an electric feedback arrangement or feedback motor as discussed above, and also with reference to the embodiments illustrated in Figs. 1-4, a mechanical feedback arrangement 4B mechanical feed comprising a spring arrangement comprising a first spring 43B seated or connected at a first seat 44B provided e.g. at an interior wall or formed by an inner protruding element in a recess within the mechanical feedback arrangement 4B or arranged in any other suitable manner in the mechanical feedback arrangement 4B, a second spring 43B' seated or connected at a second seat 44B' provided e.g. at an opposite interior wall or an inner protruding element of or arranged in any other suitable manner at the interior of the mechanical feedback arrangement 4B.

The seats 44B, 44B' are in the shown embodiment arranged on opposite sides, oppositely directed, although they can also be arranged in other manners. Through being oppositely located, any resulting bending force exerted on the steering shaft 2B by bushings 47B,47B' (as explained below) can be evened out.

The other ends of the springs 43B,43B', distant from ends connected at the seats 44B,44B', each can act on a respective outer rocker arm 451B,451B' of a respective rocker arrangement 45B,45B'. Each rocker arrangement 45B,45B' is pivotally mounted around a respective pivot shaft 46B,46B' attached to an inner wall, protruding portion or similar (not shown) in any appropriate manner at an inner portion of the mechanical feedback arrangement 4B. At a free end of an inner arm 452B,452B' of each respective rocker arrangement 45B,45B', a respective bearing shaft 48B,48B' with a bearing 47B,47B' is attached which is movable with the inner arm 452B,452B' between the respective seat 44B,44B' and the respective cam surface 21B,21B'. Thus, when the steering shaft 2B is rotated, a cam surface 21B,21B' will actuate upon a respective bearing 47B,47B', actuating upon the respective inner rocker arm 452B,452B', such that the rocker arrangement 45B,45B' will rotate around the pivot shaft 46B,46B' and the respective spring 43B,43B' will be actuated upon by the respective outer rocker arm 451B,451B' and vice versa.

In this embodiment a reaction force is provided in which in addition each inner rocker arm 49B,49B' and each bearing 47B,47B' will act on one of the cam profiles 21B,21B'; inner rocker arm 49B and bearing 47B on cam profile 21B and inner rocker arm 49B' and bearing 47B' on cam profile 21B'. An advantage is that through the use of cam profiles and through shaping the cam profiles a very precise design of the steering feedback can be provided. Another advantage of using cam profiles connected to or forming part of a steering shaft in combination with a spring arrangement as described is that the steering stroke can be up to one full revolution to both leftand right steering inputs. Particularly the cam profiles can be shaped in different manners to provide a desired torque build-up.

Through the arrangement of the mechanical feedback arrangement according to the present invention a feedback torque can be built up also for a limited turning of the steering wheel, also for the first turning degrees and the spring(s) 43;43A,43A' act tangentially to the moving direction of the actuation element(s), e.g. lever 21 or cam profile 21B,21B', and hence not directed towards the centre of the steering column. It is an advantage that also for small angles a considerable feedback torque can be generated.

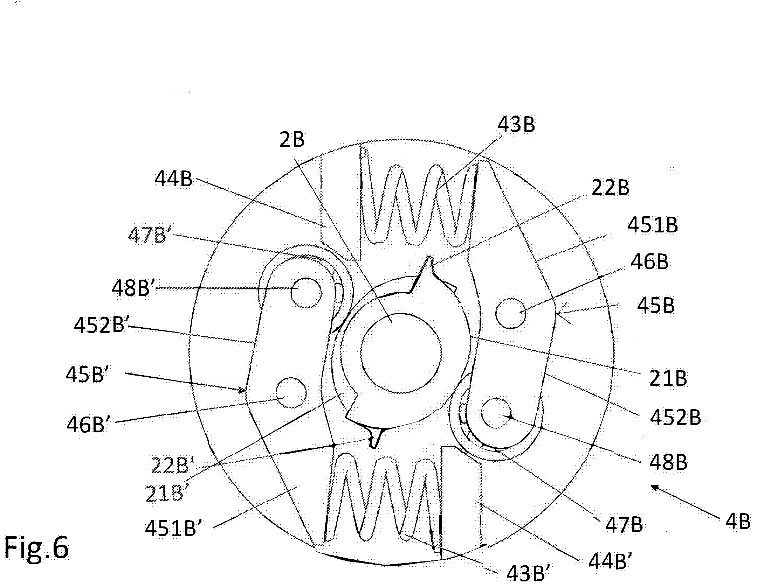

Fig. 6 shows an embodiment similar to Fig.5, and the same reference numerals are used, except for the cam profiles 21B,21B' being provided with end stop notches 22B,22B' reducing any need for a separate mechanism for defining steering wheel end lock, further assisting in reducing complexity and costs. The shape of the end stop notches 22B,22B' can be designed to obtain a desired feel of the steering wheel end lock, e.g. rather hard or rather soft.

In the embodiments , not forming part of the present invention, discussed with reference to Fig.3 and Fig. 4, inner walls or protruding element(s) 44;44A,44A' provide a steering wheel end lock functionality.

In still another alternative embodiment, forming part of the present invention and not shown, comprising two or more cam profiles as more thoroughly described with reference to the embodiment shown e.g. in Fig.5, each cam profile used is formed as a coil or a thread on a screw. The advantage of such embodiments is that the steering stroke can be extended up to approximately 2 turns in each direction which will cover the normal range of many cars. In theory the stroke has no limitation other than allowing for a practical design.

In particular embodiments (not shown) existing or additional electrical coils in the feedback motor can be used to create a damping feel. If there is a malfunction in the steering system or if there is any other reason to shut the steering down, the mechanical feedback will return the steering wheel to centre position. However, the return speed can be perceived to be to strong and unwanted overshoot and oscillations can occur. According to these embodiments of the invention, to counteract these effects, the coils in the feedback motor are connected to each other to create magnetic fields that will dampen the rotation of the steering wheel. The connection of the coils can advantageously also be done via resistors, fixed or a potentiometers, so that the dampening effect can be regulated.

In particular embodiments (not shown) a mechanical feedback arrangement as described above may comprise or be connected to an additional unit containing electric coils and a rotor which is primarily designed for providing a dampening torque. The dampening torque can be applied during faulty operation or as an addition to normal operation. The coils can also be connected via resistors, fixed or potentiometers, to allow for regulation of the dampening effect. The advantage of having an additional device for dampening torque instead of using the electric motor is that it will work also with a faulty motor.

In alternative embodiments (not shown) a mechanical feedback arrangement as described above is connected to the steering shaft instead of being connected to the electric feedback motor. This alternative allows for a high flexibility to fit different package solutions.

In yet other alternative embodiments (not shown) a mechanical feedback arrangement as described above is connected directly to the steering wheel instead of being connected to the electric feedback motor, which allows for a flexibility to fit different package solutions.

It should be clear that the invention is not limited to the specifically illustrated embodiments but that features of different embodiments can be combined in an arbitrary manner within the scope of the appended claims.

It should also be clear that the inventive concept also covers embodiments with a steering arrangement comprising for example a yoke, joystick or any other input device instead of a steering wheel. This is applicable for all embodiments of a feedback arrangement and locations of a feedback arrangement, or part thereof, as described in the present application.

It is an advantage of the present invention that, through the provisioning of a feedback arrangement comprising an electric feedback motor and a mechanical feedback arrangement to provide a feedback torque, the desired maximum feedback torque will be built by the sum of the electric feedback motor and the mechanical feedback arrangement, since the electric feedback motor can have a smaller torque rating than if it were the sole source of feedback. This will reduce fabrication costs, and the size (weight and volume) of the electric feedback arrangement can be reduced as compared to if it were the sole source of feedback. It is also an advantage to be able to have an electric feedback motor of a small size since for fabrication of an electric motor raw materials like copper and rare earth metals and other critical minerals are needed, and it is an imperative to contribute in holding down the increased demand for mining production which can have severe negative impacts on the environment, and to support a sustainable production.

It is also an advantage of the present invention that, since the feedback force is generated not only by an electric feedback motor, but also with a mechanical feedback arrangement, less energy will be used, which is of large importance, especially in an electric vehicle where every saving in electric consumption is preferred in favour of a greater range.

Another advantage of the invention is that it is easier to meet requirements as to a vehicle having to be controllable despite a failure in the steering system, which even is a legal requirement and a required functionality is that the steering shall have a self-centring effect. (Uniform provisions concerning the approval of vehicles with regard to steering equipment, UN Regulation No. 79, which must be complied with for any party seeking a UN type approval for a vehicle.)

Another advantage of the present invention is that the suggested arrangement is axially compact allowing the steering wheel (steering column) to move axially e.g. in case of an accident, enabling an good collision safety.

Still another advantage of the present invention is that an improvement in creation of properties constituting a good steering feel is made as compared to when only an electric feedback motor is used. One such property is friction feel, for which the use an electric motor is not optimal, especially for slow, zero and reversing angular speed of the motor and hence, the steering wheel. A mechanical feedback arrangement according to the present invention can be designed to achieve the desired friction feel, also for instance by replacing the bearings shown in Fig. 5 with bushings with a suitable friction coefficient.

If the feedback would be generated only by a mechanical feedback it would be not be possible to achieve different feedback characteristics for different speeds and parking, but through the exact control of feedback torque contribution form the electric feedback motor this is enabled, which is very advantageous.

The inventive concept with the use of a feedback arrangement as described above is applicable for wired or wireless steering systems for steering of different vehicles, cars, trucks, buses, but also other vehicles such as aircrafts, boats, remotely operated vehicles and radio-controlled models and toys. It can also be used for steering of vehicles in simulators and computer games while providing a feedback, e.g. a desired feedback.

It should be clear that the invention is not limited to the specifically illustrated embodiments, but that it can be varied in a number of ways within the scope of the appended claims.

## Claims

1. A steering system feedback arrangement (10) for a power assisted steering system (100), said feedback arrangement (10) being adapted for direct and/or indirect connection to a steering arrangement (1) and to an Electronic Control Unit (ECU) (5), wherein the feedback arrangement (10) comprises an electric feedback motor (3) and a mechanical feedback arrangement (4B) in combination, the mechanical feedback arrangement (4B) comprising a deformation reactive and elastic arrangement arranged to react on a movement or force produced by the steering arrangement (1) by generation of a reaction force counteracting the movement or force produced by the steering arrangement (1), said deformation reactive and elastic arrangement of the mechanical feedback arrangement (4B) comprising a spring arrangement adapted to be operatively or mechanically in engagement directly or indirectly with a steering shaft (2B), at least when the steering shaft (2B) is moved or turned, at least to a predetermined amount, wherein the mechanical feedback arrangement (4B) is arranged to apply a mechanical feedback force corresponding to or depending on the generated reaction force on the steering arrangement (1),
wherein the feedback force for application e.g.to a steering arrangement comprises a combination of, or the sum of, the mechanical feedback force and an electric feedback force provided by the electric feedback motor (3) controlled by the ECU (5),
**characterized in that**
the spring arrangement comprises at least two springs (43B,43B'), that the steering shaft (2B) comprises at least two actuation elements (21B,21B') connected to, or fixed or releasably associated with the steering shaft (2B), and adapted to be engageable with or in direct or in indirect connection with a respective of said at least two springs (43B,43B') of the spring arrangement, such that when the steering shaft (2B) is turned or rotated, the spring arrangement will be actuated upon and generate said reaction force,
and **in that** each of said at least two actuation elements (21B;21B') comprises at least one cam profile or cam surface (21B,21B'), e.g. attached to, or integral with, the steering shaft (2B), said at least two springs (43B,43B') being seated or connected at a respective seat (44B,44B') provided e.g. at an interior wall or formed by a respective inner protruding element in a recess within the mechanical feedback arrangement (4B), that the mechanical feedback arrangement (4B) comprises at least two rocker arrangements (45B,45B') pivotally arranged on a respective pivot shaft (46B,46B') axially parallel with the steering shaft (2B) and each comprising, on opposite sides of said respective pivot shafts (46B,46B') extending first and second rocker arms (451B,452B,451B',452B'), such that each respective first rocker arm (451B,451B') is in contact with a respective spring (43B,43B'), each respective second rocker arm (452B,452B') being associated with or operatively connected to a respective bearing (47B,47B') arranged on a respective bearing shaft (48B,48B') axially parallel with the steering shaft (2B), each of said bearings (47B,47B') being arranged to interact with a respective of said cam profiles or cam surfaces (21B,21B'), such that when the steering shaft (2B) is rotated, a respective cam surface (21B,21B') will actuate upon a respective bearing (47B,47B'), actuating upon the respective inner rocker arm (452B,452B'), such that the rocker arrangement (45B,45B') will rotate around the pivot shaft (46B,46B') and the respective spring (43B,43B') will be actuated upon by the respective first, outer, rocker arm (451B,451B') and vice versa.

2. A steering system feedback arrangement (10) according to claim 1,
**characterized in that**
the mechanical feedback arrangement (4B) is adapted to be connectable to the steering shaft (2B), and is connected to, or separate from, the electric feedback motor (3) or that the mechanical feedback arrangement (4B) is adapted for direct connection to a steering arrangement (1), separate from the electric feedback motor (3).

3. A steering system feedback arrangement (10) according to claim 1 or 2,
**characterized in that**
the mechanical feedback arrangement (4B) is adapted to be connectable e.g. to the steering shaft (2B), and is connected to or separate from the electric feedback motor (3) and **in that** the mechanical feedback arrangement (4B) is adapted for interaction with the actuation elements (21B,21B') connected to, or fixed or releasably associated with the steering system steering shaft (2B) to provide the reaction force.

4. A power assisted steering system (100), for a vehicle or similar, comprising a steering arrangement (1), a steering shaft (2B) connected to the steering arrangement (1), steerable elements (13,13), an electrically controllable actuator (8) arranged on or connected to a link arrangement (9) connected to the steerable elements (13,13), an Electronic Control Unit (ECU) (5) controlling the electrically controllable actuator (8) and a feedback arrangement (10) connected to the Electronic Control Unit (ECU) (5),
**characterized in that**
that the feedback arrangement (10) is a feedback arrangement according to any one of claims 1-3,

5. A power assisted steering system (100) according to claim 4,
**characterized in that**
the steerable elements (13,13) comprise steerable wheels, front and/or rear suspension wheels.

6. A power assisted steering system (100) according to claim 4 or 5,
**characterized in**
**that** the link arrangement comprises a track rod arrangement or a steering rack (9) via steering rods (12,12) connected to the steerable wheels (13,13).

7. A power assisted steering system (100) according to any one claims 4-6,
**characterized in that**
the steering arrangement comprises a steering wheel (1).

8. A power assisted steering system (100) according to any one of claims 4-7,
**characterized in that**
the steering arrangement comprises a joystick, a yoke or any other appropriate input device.

9. A power assisted steering system (100) according to any one of the 4-8,
**characterized in that**
the mechanical feedback arrangement (4B) comprises a passive force feedback element (PFFE) comprising said deformation reactive and elastic arrangement.

10. A power assisted steering system (100) according to any one claims 4-9,
**characterized in that**
the mechanical feedback arrangement (4B), or mechanical feedback module, is connected to the electric feedback motor (3), the electric feedback motor (3) being arranged on, or connected to, the steering shaft (2B), that the mechanical feedback arrangement (4B) is connected to the steering shaft (2B), e.g. at an end of the steering shaft (2B) distant from the steering arrangement (1), or that the electric feedback motor (3) is arranged on, or connected to, the steering shaft (2B) at an end of the steering shaft (2B) distant from the steering arrangement (1).

11. A power assisted steering system (100) according to any one of claims 4-9,
**characterised in that**
the mechanical feedback arrangement (4B) is connected directly to the steering shaft (2B), separate from the electric feedback motor (3), or that the mechanical feedback arrangement (4B) is connected directly to the steering arrangement (1).

12. A power assisted steering system (100) according to any one of claims 4-9,
**characterized in that**
the spring arrangement comprises two springs (43B,43B'), e.g. coil springs, leaf springs, washer shaped spring elements or any other elastic elements executing a force when deformed, said two springs (43B,43B') being mechanically connected to a respective wall element or a respective protrusion or similar, e.g. in an inner wall or a respective protruding element (44B,44B') in a respective inner recess of the mechanical feedback arrangement (4B), the mechanical feedback arrangement (4B) e.g. being mounted such as to be fixed with relation to the steering shaft (2B).

13. A power assisted steering system (100) according to any one of the preceding claims,
**characterized in that**
the it comprises a steer-by-wire steering system or a wireless steering system.

14. A method for providing feedback in a steer by wire or wireless steering system (100) comprising a steering arrangement (1), a steering shaft (2B) connected to the steering arrangement (1), steerable elements (13,13), an electrically controllable actuator (8) arranged on or connected to a link arrangement (9) connected to the steerable elements (13,13), an Electronic Control Unit (ECU) (5) controlling the electrically controllable actuator (8) and a feedback arrangement (10) connected to the Electronic Control Unit (ECU) (5), said feedback arrangement (10) being directly or indirectly connected to the steering arrangement (1) for applying a force to the steering arrangement (1) and said Electronic Control Unit (ECU) (5) being arranged for controlling said feedback arrangement (10), the feedback arrangement (10) comprising an electric feedback motor (3) and a mechanical feedback arrangement (4B),
the mechanical feedback arrangement (4B) comprising a deformation reactive and elastic arrangement, said deformation reactive and elastic arrangement of the mechanical feedback arrangement (4B) comprising a spring arrangement adapted to be operatively or mechanically in engagement directly or indirectly with the steering shaft (2B), at least when the steering shaft (2B) is moved or turned, at least to a predetermined amount,
the method comprising the steps of:
- generation, in the mechanical feedback arrangement (4B), upon sensing a movement or force produced by the steering arrangement (1), of a reaction force counteracting the movement or force produced by the steering arrangement (1) to provide a mechanical feedback force corresponding to or depending on the generated reaction force, wherein, when the steering shaft (2B) is turned or rotated, the spring arrangement will be actuated upon and generate said reaction force,
- applying a combination of, or the sum of, the generated mechanical feedback force and an electric feedback force provided by the electric feedback motor (3) controlled by the ECU (5) on the steering arrangement (1),
**characterized in that**
the spring arrangement comprises at least two springs (43B,43B'), that the steering shaft (2B) comprises at least two actuation elements (21B;21B') connected to, or fixed or releasably associated with the steering shaft (2B), and adapted to be engageable with or in direct or in indirect connection with a respective of said at least two springs (43B,43B') of the spring arrangement, such that when the steering shaft (2B) is turned or rotated, the spring arrangement will be actuated upon and generate said reaction force,
and **in that** each of said at least two actuation elements (21B;21B') comprises at least one cam profile or cam surface (21B,21B'), e.g. attached to, or integral with, the steering shaft (2B), said at least two springs (43B,43B') being seated or connected at a respective seat (44B,44B') provided e.g. at an interior wall or formed by a respective inner protruding element in a recess within the mechanical feedback arrangement (4B), that the mechanical feedback arrangement (4B) comprises at least two rocker arrangements (45B,45B') pivotally arranged on a respective pivot shaft (46B,46B') axially parallel with the steering shaft (2B) and each comprising, on opposite sides of said respective pivot shafts (46B,46B') extending first and second rocker arms (451B,452B,451B',452B'), such that each respective first rocker arm (451B,451B') is in contact with a respective spring (43B,43B'), each respective second rocker arm (452B,452B') being associated with or operatively connected to a respective bearing (47B,47B') arranged on a respective bearing shaft (48B,48B') axially parallel with the steering shaft (2B), each of said bearings (47B,47B') being arranged to interact with a respective of said cam profiles or cam surfaces (21B,21B'), such that when the steering shaft (2B) is rotated, a respective cam surface (21B,21B') will actuate upon a respective bearing (47B,47B'), actuating upon the respective inner rocker arm (452B,452B'), such that the rocker arrangement (45B,45B') will rotate around the pivot shaft (46B,46B') and the respective spring (43B,43B') will be actuated upon by the respective first, outer, rocker arm (451B,451B') and vice versa.

15. A vehicle comprising a wired or wireless steering system according to any one of the claims 4-13,
**characterized in that**
is a car, a bus, a truck, an aircraft, a boat, a remotely operable vehicle, a vehicle in a simulator or in a computer game.

## Patentansprüche

1. Lenksystemrückkopplungsanordnung (10) für ein servounterstütztes Lenksystem (100), wobei die Rückkopplungsanordnung (10) für eine direkte und/oder indirekte Verbindung mit einer Lenkanordnung (1) und einer elektronischen Steuereinheit (ECU) (5) ausgelegt ist, wobei die Rückkopplungsanordnung (10) einen elektrischen Rückkopplungsmotor (3) und eine mechanische Rückkopplungsanordnung (4B) in Kombination hat, wobei die mechanische Rückkopplungsanordnung (4B) eine verformungsreaktive und elastische Anordnung hat, die so angeordnet ist, dass sie auf eine von der Lenkanordnung (1) erzeugte Bewegung oder Kraft reagiert, indem sie eine der von der Lenkanordnung (1) erzeugten Bewegung oder Kraft entgegenwirkende Reaktionskraft erzeugt, wobei die verformungsreaktive und elastische Anordnung der mechanischen Rückkopplungsanordnung (4B) eine Federanordnung hat, die angepasst ist, direkt oder indirekt mit einer Lenkwelle (2B) in Eingriff gebracht zu werden, zumindest wenn die Lenkwelle (2B) bewegt oder gedreht wird, zumindest um einen vorbestimmten Betrag, wobei die mechanische Rückkopplungsanordnung (4B) angeordnet ist, eine mechanische Rückkopplungskraft anzuwenden, die der erzeugten Reaktionskraft auf die Lenkanordnung (1) entspricht oder von dieser abhängt,
wobei die Rückkopplungskraft zum Aufbringen beispielsweise auf eine Lenkanordnung eine Kombination aus oder die Summe von der mechanischen Rückkopplungskraft und einer elektrischen Rückkopplungskraft hat, die durch den von der ECU (5) gesteuerten elektrischen Rückkopplungsmotor (3) bereitgestellt wird,
**dadurch gekennzeichnet, dass**
die Federanordnung mindestens zwei Federn (43B, 43B') hat, dass die Lenkwelle (2B) mindestens zwei Betätigungselemente (21B, 21B') hat, die mit der Lenkwelle (2B) verbunden oder an dieser befestigt oder lösbar zusammenhängend dieser zugeordnet sind und angepasst sind, dass sie mit einer der mindestens zwei Federn (43B, 43B') in Eingriff bringbar sind oder in direkter oder indirekter Verbindung mit einer der zwei Federn (43B, 43B') der Federanordnung stehen, derart, dass, wenn die Lenkwelle (2B) gewendet oder gedreht wird, die Federanordnung betätigt wird und die Reaktionskraft erzeugt,
und dass jedes der mindestens zwei Betätigungselemente (21B; 21B') mindestens ein Nockenprofil oder eine Nockenfläche (21B, 21B') hat, das/die beispielsweise an der Lenkwelle (2B) angebracht oder einstückig mit dieser ausgebildet ist, wobei die mindestens zwei Federn (43B, 43B') an einem jeweiligen Sitz (44B, 44B') sitzen oder mit diesem verbunden sind, der beispielsweise an einer Innenwand bereitgestellt oder durch ein entsprechendes inneres vorragendes Element in einer Aussparung innerhalb der mechanischen Rückkoppelungsanordnung (4B) ausgebildet ist, dass die mechanische Rückkopplungsanordnung (4B) mindestens zwei Kipphebelanordnungen (45B, 45B') hat, die schwenkbar an einer jeweiligen Schwenkwelle (46B, 46B') axial parallel zur Lenkwelle (2B) angeordnet sind, und die jeweils sich auf gegenüberliegenden Seiten der jeweiligen Schwenkwellen (46B, 46B') erstreckende erste und zweite Kipphebel (451B, 452B, 451B', 452B') haben, derart, dass jeder entsprechende erste Kipphebel (451B, 451B') mit einer entsprechenden Feder (43B, 43B') in Berührung ist, jeder entsprechende zweite Kipphebel (452B, 452B') mit einem entsprechenden Lager (47B, 47B') verbunden oder betriebsmäßig verbunden ist, das auf einer jeweiligen Lagerwelle (48B, 48B') axial parallel zur Lenkwelle (2B) angeordnet ist, wobei jedes der Lager (47B, 47B') so angeordnet ist, dass es mit einem jeweiligen der Nockenprofile oder Nockenflächen (21B, 21B') zusammenwirkt, derart, dass, wenn die Lenkwelle (2B) gedreht wird, eine jeweilige Nockenoberfläche (21B, 21B') auf ein jeweiliges Lager (47B, 47B') einwirkt, wodurch der jeweilige innere Kipphebel (452B, 452B') betätigt wird, sodass sich die Kipphebelanordnung (45B, 45B') um die Schwenkachse (46B, 46B') dreht und die jeweilige Feder (43B, 43B') durch den jeweiligen ersten, außenliegenden Kipphebel (451B, 451B') betätigt wird und umgekehrt.

2. Rückkopplungsanordnung (10) für ein Lenksystem gemäß Anspruch 1,
**dadurch gekennzeichnet, dass**
die mechanische Rückkopplungsanordnung (4B) angepasst ist, dass sie mit der Lenkwelle (2B) verbunden werden kann und mit dem elektrischen Rückkopplungsmotor (3) verbunden oder von diesem getrennt ist, oder dass die mechanische Rückkopplungsanordnung (4B) getrennt vom elektrischen Rückkopplungsmotor ist (3) für eine direkte Verbindung mit einer Lenkanordnung (1) angepasst ist.

3. Rückkopplungsanordnung (10) für ein Lenksystem gemäß Anspruch 1 oder 2,
**dadurch gekennzeichnet, dass**
die mechanische Rückkopplungsanordnung (4B) angepasst ist, dass sie beispielsweise mit der Lenkwelle (2B) verbunden werden kann, und mit dem elektrischen Rückkopplungsmotor (3) verbunden oder von diesem getrennt ist, und dass
die mechanische Rückkopplungsanordnung (4B) für eine Wechselwirkung mit den Betätigungselementen (21B, 21B') ausgelegt ist, die mit der Lenkwelle (2B) des Lenksystems verbunden oder an dieser befestigt oder lösbar zusammenhängend mit dieser verbunden sind, um die Reaktionskraft bereitzustellen.

4. Servolenkungssystem (100) für ein Fahrzeug oder ähnliches, mit einer Lenkanordnung (1), einer mit der Lenkanordnung (1) verbundenen Lenkwelle (2B), lenkbaren Elementen (13, 13), einem elektrisch steuerbaren Stellglied (8), das an einer mit den lenkbaren Elementen (13, 13) verbundenen Anordnung (9) angeordnet oder mit dieser verbunden ist, einer elektronischen Steuereinheit (ECU) (5), die das elektrisch steuerbare Stellglied (8) steuert, und eine Rückkopplungsanordnung (10), die mit der elektronischen Steuereinheit (ECU) (5) verbunden ist,
**dadurch gekennzeichnet, dass**
die Rückkopplungsanordnung (10) eine Rückkopplungsanordnung gemäß einem der Ansprüche 1 bis 3 ist.

5. Servolenkungssystem (100) gemäß Anspruch 4,
**dadurch gekennzeichnet, dass**
die lenkbaren Elemente (13, 13) lenkbare Räder, vordere und/oder hintere Aufhängungsräder haben.

6. Servolenkungssystem (100) gemäß Anspruch 4 oder 5,
**dadurch gekennzeichnet, dass**
die Verbindungsanordnung eine Spurstangenanordnung oder eine Lenkstange (9) über Lenkstangen (12, 12) hat, die mit den lenkbaren Rädern (13, 13) verbunden sind.

7. Servolenkungssystem (100) gemäß einem der Ansprüche 4 bis 6,
**dadurch gekennzeichnet, dass**
die Lenkanordnung ein Lenkrad (1) hat.

8. Servolenkungssystem (100) gemäß einem der Ansprüche 4 bis 7,
**dadurch gekennzeichnet, dass**
die Anordnung einen Joystick, ein Steuerhorn oder ein anderes geeignetes Eingabegerät hat.

9. Servolenkungssystem (100) gemäß einem der Ansprüche 4 bis 8,
**dadurch gekennzeichnet, dass**
die mechanische Rückkopplungsanordnung (4B) ein passives Kraftrückkopplungselement (PFFE) hat, das die verformungsreaktive und elastische Anordnung hat.

10. Servolenkungssystem (100) gemäß einem der Ansprüche 4 bis 9,
**dadurch gekennzeichnet, dass**
die mechanische Rückkopplungsanordnung (4B) oder das mechanische Rückkopplungsmodul mit dem elektrischen Rückkopplungsmotor (3) verbunden ist, wobei der elektrische Rückkopplungsmotor (3) an der Lenkwelle (2B) angeordnet oder mit dieser verbunden ist, dass die mechanische Rückkopplungsanordnung (4B) mit der Lenkwelle (2B) verbunden ist, beispielsweise an einem von der Lenkanordnung (1) entfernten Ende der Lenkwelle (2B), oder dass der elektrische Rückkopplungsmotor (3) an einem von der Lenkanordnung (1) entfernten Ende der Lenkwelle (2B) angeordnet oder mit dieser verbunden ist.

11. Servolenkungssystem (100) gemäß einem der Ansprüche 4 bis 9,
**dadurch gekennzeichnet, dass**
die mechanische Rückkopplungsanordnung (4B) getrennt vom elektrischen Rückkopplungsmotor (3) direkt mit der Lenkwelle (2B) verbunden ist, oder dass die mechanische Rückkopplungsanordnung (4B) direkt mit der Lenkanordnung (1) verbunden ist.

12. Servolenkungssystem (100) gemäß einem der Ansprüche 4 bis 9,
**dadurch gekennzeichnet, dass**
die Federanordnung zwei Federn (43B, 43B') hat, beispielsweise Schraubenfedern, Blattfedern, scheibenförmige Federelemente oder andere elastische Elemente, die bei Verformung eine Kraft ausüben, wobei die beiden Federn (43B, 43B ,) mechanisch mit einem jeweiligen Wandelement oder einem jeweiligen Vorsprung oder Ähnlichem verbunden sind, beispielsweise in einer Innenwand oder einem jeweiligen vorragenden Element (44B, 44B') in einer jeweiligen inneren Aussparung der mechanischen Rückkopplungsanordnung (4B), wobei die mechanische Rückkopplungsanordnung (4B) beispielsweise so eingebaut ist, dass sie mit Bezug auf die Lenkwelle (2B) fixiert ist.

13. Servolenkungssystem (100) gemäß einem der vorangehenden Ansprüche,
**dadurch gekennzeichnet, dass**
es ein Steer-by-Wire-Lenksystem oder ein drahtloses Lenksystem hat.

14. Verfahren zum Bereitstellen einer Rückkopplung in einem Steer-by-Wire- oder drahtlosen Lenksystem (100), das eine Lenkanordnung (1), eine mit der Lenkanordnung (1) verbundene Lenkwelle (2B), lenkbare Elemente (13, 13), ein elektrisch steuerbares Stellglied (8), das an einer mit den lenkbaren Elementen (13, 13) verbundenen Verbindungsvorrichtung (9) angeordnet oder mit dieser verbunden ist, eine elektronische Steuereinheit (ECU) (5), die den elektrisch steuerbaren Aktuator (8) steuert, und eine Rückkopplungsanordnung (10), die mit der elektronischen Steuereinheit (ECU) (5) verbunden ist, wobei die Rückkopplungsanordnung (10) direkt oder indirekt mit der Lenkanordnung (1) verbunden ist, um eine Kraft auf die Lenkanordnung (1) auszuüben, und wobei die elektronische Steuereinheit (ECU) (5) zur Steuerung der Rückkopplungsanordnung (10) vorgesehen ist, wobei die Rückkopplungsanordnung (10) einen elektrischen Rückkopplungsmotor (3) und eine mechanische Rückkopplungsanordnung (4B) hat,
wobei die mechanische Rückkopplungsanordnung (4B) eine verformungsreaktive und elastische Anordnung hat, wobei die verformungsreaktive und elastische Anordnung der mechanischen Rückkopplungsanordnung (4B) eine Federanordnung hat, die angepasst ist, dass sie direkt oder indirekt mit der Lenkwelle (2B) in Eingriff bringt, zumindest wenn die Lenkwelle (2B) bewegt oder gedreht wird, zumindest um einen vorbestimmten Betrag,
wobei das Verfahren die folgenden Schritte hat:
- Erzeugen einer Reaktionskraft in der mechanischen Rückkopplungsanordnung (4B) beim Erfassen einer von der Lenkanordnung (1) erzeugten Bewegung oder Kraft, die der von der Lenkanordnung (1) erzeugten Bewegung oder Kraft entgegenwirkt, um eine mechanische Rückkopplungskraft bereitzustellen, die der erzeugten Reaktionskraft entspricht oder von dieser abhängt, wobei bei einem Umkehren oder Drehen der Lenkwelle (2B) die Federanordnung betätigt wird und die Reaktionskraft erzeugt,
- Anwenden der erzeugten mechanischen Rückkopplungskraft und der elektrischen Rückkopplungskraft die durch den durch die ECU (5) gesteuerten elektrischen Rückkopplungsmotor (3) auf die Lenkanordnung (1) ausgeübt werden,
**dadurch gekennzeichnet, dass**
die Federanordnung mindestens zwei Federn (43B, 43B') hat, dass die Lenkwelle (2B) mindestens zwei Betätigungselemente (21B, 21B') hat, die mit der Lenkwelle (2B) verbunden oder an dieser befestigt oder lösbar zusammenhängend dieser zugeordnet sind und angepasst sind, dass sie mit einer der mindestens zwei Federn (43B, 43B') in Eingriff bringbar sind oder in direkter oder indirekter Verbindung mit einer der zwei Federn (43B, 43B') der Federanordnung stehen, derart, dass, wenn die Lenkwelle (2B) gewendet oder gedreht wird, die Federanordnung betätigt wird und die Reaktionskraft erzeugt,
und dass jedes der mindestens zwei Betätigungselemente (21B; 21B') mindestens ein Nockenprofil oder eine Nockenfläche (21B, 21B') hat, das/die beispielsweise an der Lenkwelle (2B) angebracht oder einstückig mit dieser ausgebildet ist, wobei die mindestens zwei Federn (43B, 43B') an einem jeweiligen Sitz (44B, 44B') sitzen oder mit diesem verbunden sind, der beispielsweise an einer Innenwand bereitgestellt oder durch ein entsprechendes inneres vorragendes Element in einer Aussparung innerhalb der mechanischen Rückkoppelungsanordnung (4B) ausgebildet ist, dass die mechanische Rückkopplungsanordnung (4B) mindestens zwei Kipphebelanordnungen (45B, 45B') hat, die schwenkbar an einer jeweiligen Schwenkwelle (46B, 46B') axial parallel zur Lenkwelle (2B) angeordnet sind, und die jeweils sich auf gegenüberliegenden Seiten der jeweiligen Schwenkwellen (46B, 46B') erstreckende erste und zweite Kipphebel (451B, 452B, 451B', 452B') haben, derart, dass jeder entsprechende erste Kipphebel (451B, 451B') mit einer entsprechenden Feder (43B, 43B') in Berührung ist, jeder entsprechende zweite Kipphebel (452B, 452B') mit einem entsprechenden Lager (47B, 47B') verbunden oder betriebsmäßig verbunden ist, das auf einer jeweiligen Lagerwelle (48B, 48B') axial parallel zur Lenkwelle (2B) angeordnet ist, wobei jedes der Lager (47B, 47B') so angeordnet ist, dass es mit einem jeweiligen der Nockenprofile oder Nockenflächen (21B, 21B') zusammenwirkt, derart, dass, wenn die Lenkwelle (2B) gedreht wird, eine jeweilige Nockenoberfläche (21B, 21B') auf ein jeweiliges Lager (47B, 47B') einwirkt, wodurch der jeweilige innere Kipphebel (452B, 452B') betätigt wird, sodass sich die Kipphebelanordnung (45B, 45B') um die Schwenkachse (46B, 46B') dreht und die jeweilige Feder (43B, 43B') durch den jeweiligen ersten, außenliegenden Kipphebel (451B, 451B') betätigt wird und umgekehrt.

15. Fahrzeug mit einem drahtgebundenen oder drahtlosen Lenksystem gemäß einem der Ansprüche 4 bis 13,
**dadurch gekennzeichnet, dass**
es sich um ein Auto, einen Bus, einen Lkw, ein Flugzeug, ein Boot, ein ferngesteuertes Fahrzeug, ein Fahrzeug in einem Simulator oder in einem Computerspiel handelt.

## Revendications

1. Agencement de rétroaction de système de direction (10) pour un système de direction assistée électrique (100), ledit agencement de rétroaction (10) étant adapté pour une liaison directe et/ou indirecte à un agencement de direction (1) et à une unité de commande électronique (ECU) (5), dans lequel l'agencement de rétroaction (10) comprend un moteur de rétroaction électrique (3) et un agencement de rétroaction mécanique (4B) en combinaison, l'agencement de rétroaction mécanique (4B) comprenant un agencement élastique et réactif à la déformation agencé pour réagir à un mouvement ou à une force produit(e) par l'agencement de direction (1) en générant une force de réaction s'opposant au mouvement ou à la force produit(e) par l'agencement de direction (1), ledit agencement élastique et réactif à la déformation de l'agencement de rétroaction mécanique (4B) comprenant un agencement à ressorts adapté pour être en engagement opérationnel ou mécanique, directement ou indirectement, avec un arbre de direction (2B), au moins lorsque l'arbre de direction (2B) est déplacé ou tourné, au moins d'une quantité prédéterminée,
dans lequel l'agencement de rétroaction mécanique (4B) est agencé pour appliquer une force de rétroaction mécanique correspondant à ou dépendant de la force de réaction générée sur l'agencement de direction (1),
dans lequel la force de rétroaction à appliquer, par exemple à un agencement de direction, comprend une combinaison, ou la somme, de la force de rétroaction mécanique et d'une force de rétroaction électrique fournie par le moteur de rétroaction électrique (3) commandé par l'ECU (5),
**caractérisé en ce que**
l'agencement à ressorts comprend au moins deux ressorts (43B, 43B'), **en ce que** l'arbre de direction (2B) comprend au moins deux éléments d'actionnement (21B, 21B') reliés à l'arbre de direction (2B), ou fixés ou associés de manière amovible à celui-ci, et adaptés pour être engagés avec ou en liaison directe ou indirecte avec l'un respectif desdits au moins deux ressorts (43B, 43B') de l'agencement à ressorts, de sorte que lorsque l'arbre de direction (2B) est tourné ou mis en rotation, l'agencement à ressorts soit actionné et génère ladite force de réaction,
et **en ce que** chacun desdits au moins deux éléments d'actionnement (21B ; 21B') comprend au moins un profil de came ou une surface de came (21B, 21B'), par exemple fixé(e) à l'arbre de direction (2B) ou solidaire de celui-ci, lesdits au moins deux ressorts (43B, 43B') étant placés ou reliés au niveau d'un siège respectif (44B, 44B') prévu par exemple au niveau d'une paroi intérieure ou formé par un élément saillant interne respectif dans un évidement à l'intérieur de l'agencement de rétroaction mécanique (4B), **en ce que** l'agencement de rétroaction mécanique (4B) comprend au moins deux agencements à culbuteur (45B, 45B') agencés en pivotement sur un arbre de pivotement respectif (46B, 46B') axialement parallèle à l'arbre de direction (2B) et comprenant chacun, sur les côtés opposés desdits arbres de pivotement respectifs (46B, 46B'), des premier et second bras de culbuteur (451B, 452B, 451B', 452B') s'étendant de sorte que chaque premier bras de culbuteur respectif (451B, 451B') soit en contact avec un ressort respectif (43B, 43B'), chaque second bras de culbuteur respectif (452B, 452B') étant associé, ou relié de manière opérationnelle, à un palier respectif (47B, 47B') agencé sur un arbre de palier respectif (48B, 48B') axialement parallèle à l'arbre de direction (2B), chacun desdits paliers (47B, 47B') étant agencé pour interagir avec un profil de came respectif ou une surface de came respective parmi lesdits profils de came ou lesdites surfaces de came (21B, 21B'), de sorte que lorsque l'arbre de direction (2B) est mis en rotation, une surface de came respective (21B, 21B') agisse sur un palier respectif (47B, 47B'), agissant sur le bras de culbuteur interne respectif (452B, 452B'), de sorte que l'agencement à culbuteur (45B, 45B') tourne autour de l'arbre de pivotement (46B, 46B') et que le ressort respectif (43B, 43B') soit actionné par le premier bras de culbuteur externe respectif (451B, 451B') et vice versa.

2. Agencement de rétroaction de système de direction (10) selon la revendication 1,
**caractérisé en ce que**
l'agencement de rétroaction mécanique (4B) est adapté pour pouvoir être relié à l'arbre de direction (2B) et est relié au moteur de rétroaction électrique (3) ou séparé de celui-ci, ou **en ce que** l'agencement de rétroaction mécanique (4B) est adapté pour une liaison directe à un agencement de direction (1), séparé du moteur de rétroaction électrique (3).

3. Agencement de rétroaction de système de direction (10) selon la revendication 1 ou 2,
**caractérisé en ce que**
l'agencement de rétroaction mécanique (4B) est adapté pour pouvoir être relié, par exemple, à l'arbre de direction (2B), et est relié au moteur électrique à rétroaction (3) ou séparé de celui-ci, et **en ce que** l'agencement de rétroaction mécanique (4B) est adapté pour une interaction avec les éléments d'actionnement (21B, 21B') reliés, ou fixés ou associés de manière amovible à l'arbre de direction (2B) de système de direction afin de fournir la force de réaction.

4. Système de direction assistée électrique (100) pour un véhicule ou similaire, comprenant un agencement de direction (1), un arbre de direction (2B) relié à l'agencement de direction (1), des éléments orientables (13, 13), un actionneur à commande électrique (8) agencé sur ou relié à un agencement de liaison (9) relié aux éléments orientables (13, 13), une unité de commande électronique (ECU) (5) commandant l'actionneur à commande électrique (8) et un agencement de rétroaction (10) relié à l'unité de commande électronique (ECU) (5),
**caractérisé en ce que**
l'agencement de rétroaction (10) est un agencement de rétroaction selon l'une quelconque des revendications 1 à 3.

5. Système de direction assistée électrique (100) selon la revendication 4,
**caractérisé en ce que**
les éléments orientables (13, 13) comprennent des roues orientables, des roues de suspension avant et/ou arrière.

6. Système de direction assistée électrique (100) selon la revendication 4 ou 5,
**caractérisé en ce que**
l'agencement de liaison comprend un agencement à barre d'accouplement ou une crémaillère de direction (9) via des barres de direction (12, 12) reliées aux roues orientables (13, 13).

7. Système de direction assistée électrique (100) selon l'une quelconque des revendications 4 à 6,
**caractérisé en ce que**
l'agencement de direction comprend un volant de direction (1).

8. Système de direction assistée électrique (100) selon l'une quelconque des revendications 4 à 7,
**caractérisé en ce que**
l'agencement de direction comprend un levier de commande, un manche ou tout autre dispositif d'entrée approprié.

9. Système de direction assistée électrique (100) selon l'une quelconque des revendications 4 à 8,
**caractérisé en ce que**
l'agencement de rétroaction mécanique (4B) comprend un élément de rétroaction de force passive (PFFE) comprenant ledit agencement élastique et réactif à la déformation.

10. Système de direction assistée électrique (100) selon l'une quelconque des revendications 4 à 9,
**caractérisé en ce que**
l'agencement de rétroaction mécanique (4B), ou module de rétroaction mécanique, est relié au moteur de rétroaction électrique (3), le moteur de rétroaction électrique (3) étant agencé sur l'arbre de direction (2B) ou relié à celui-ci, **en ce que** l'agencement de rétroaction mécanique (4B) est relié à l'arbre de direction (2B), par exemple au niveau d'une extrémité de l'arbre de direction (2B) éloignée de l'agencement de direction (1), ou **en ce que** le moteur de rétroaction électrique (3) est agencé sur l'arbre de direction (2B) ou relié à celui-ci au niveau d'une extrémité de l'arbre de direction (2B) éloignée de l'agencement de direction (1).

11. Système de direction assistée électrique (100) selon l'une quelconque des revendications 4 à 9,
**caractérisé en ce que**
l'agencement de rétroaction mécanique (4B) est relié directement à l'arbre de direction (2B), séparément du moteur de rétroaction électrique (3), ou **en ce que** l'agencement de rétroaction mécanique (4B) est relié directement à l'agencement de direction (1).

12. Système de direction assistée électrique (100) selon l'une quelconque des revendications 4 à 9,
**caractérisé en ce que**
l'agencement à ressorts comprend deux ressorts (43B, 43B'), par exemple des ressorts hélicoïdaux, des ressorts à lames, des éléments de ressort en forme de rondelles ou tout autre élément élastique exerçant une force lorsqu'il est déformé, lesdits deux ressorts (43B, 43B') étant reliés mécaniquement à un élément de paroi respectif ou à une saillie respective ou similaire, par exemple dans une paroi interne ou un élément saillant respectif (44B, 44B') dans un évidement interne respectif de l'agencement de rétroaction mécanique (4B), l'agencement de rétroaction mécanique (4B) étant par exemple monté de manière à être fixé par rapport à l'arbre de direction (2B).

13. Système de direction assistée électrique (100) selon l'une quelconque des revendications précédentes,
**caractérisé en ce que**
il comprend un système de direction à commande électrique ou un système de direction sans fil.

14. Procédé pour fournir une rétroaction dans un système de direction à commande électrique ou sans fil (100) comprenant un agencement de direction (1), un arbre de direction (2B) relié à l'agencement de direction (1), des éléments orientables (13, 13), un actionneur à commande électrique (8) agencé sur ou relié à un agencement de liaison (9) relié aux éléments orientables (13, 13), une unité de commande électronique (ECU) (5) commandant l'actionneur à commande électrique (8) et un agencement de rétroaction (10) relié à l'unité de commande électronique (ECU) (5), ledit agencement de rétroaction (10) étant relié directement ou indirectement à l'agencement de direction (1) pour appliquer une force à l'agencement de direction (1) et ladite unité de commande électronique (ECU) (5) étant agencée pour commander ledit agencement de rétroaction (10), l'agencement de rétroaction (10) comprenant un moteur de rétroaction électrique (3) et un agencement de rétroaction mécanique (4B), l'agencement de rétroaction mécanique (4B) comprenant un agencement élastique et réactif à la déformation, ledit agencement élastique et réactif à la déformation de l'agencement de rétroaction mécanique (4B) comprenant un agencement à ressorts adapté pour être en engagement opérationnel ou mécanique, directement ou indirectement, avec l'arbre de direction (2B), au moins lorsque l'arbre de direction (2B) est déplacé ou tourné, au moins d'une quantité prédéterminée,
le procédé comprenant les étapes de :
- génération, dans l'agencement de rétroaction mécanique (4B), lors de la détection d'un mouvement ou d'une force produit(e) par l'agencement de direction (1), d'une force de réaction s'opposant au mouvement ou à la force produit(e) par l'agencement de direction (1) afin de fournir une force de rétroaction mécanique correspondant à, ou dépendant de, la force de réaction générée, dans lequel, lorsque l'arbre de direction (2B) est tourné ou mis en rotation, l'agencement à ressorts est actionné et génère ladite force de réaction,
- application d'une combinaison, ou de la somme, de la force de rétroaction mécanique générée et d'une force de rétroaction électrique fournie par le moteur de rétroaction électrique (3) commandé par l'ECU (5) sur l'agencement de direction (1),
**caractérisé en ce que**
l'agencement à ressorts comprend au moins deux ressorts (43B, 43B'), **en ce que** l'arbre de direction (2B) comprend au moins deux éléments d'actionnement (21B ; 21B') reliés, ou fixés ou associés de manière amovible à l'arbre de direction (2B), et adaptés pour pouvoir être engagés avec ou en liaison directe ou indirecte avec l'un respectif desdits au moins deux ressorts (43B, 43B') de l'agencement à ressorts, de sorte que lorsque l'arbre de direction (2B) est tourné ou mis en rotation, l'agencement à ressorts soit actionné et génère ladite force de réaction,
et **en ce que** chacun desdits au moins deux éléments d'actionnement (21B ; 21B') comprend au moins un profil de came ou une surface de came (21B, 21B'), par exemple fixé(e) à l'arbre de direction (2B) ou solidaire de celui-ci, lesdits au moins deux ressorts (43B, 43B') étant placés ou reliés au niveau d'un siège respectif (44B, 44B') prévu par exemple au niveau d'une paroi intérieure ou formé par un élément saillant interne respectif dans un évidement à l'intérieur de l'agencement de rétroaction mécanique (4B), **en ce que** l'agencement de rétroaction mécanique (4B) comprend au moins deux agencements à culbuteur (45B, 45B') agencés de manière pivotante sur un arbre de pivotement respectif (46B, 46B') axialement parallèle à l'arbre de direction (2B) et comprenant chacun, sur les côtés opposés desdits arbres de pivotement respectifs (46B, 46B'), des premier et second bras de culbuteur (451B, 452B, 451B', 452B') s'étendant de sorte que chaque premier bras de culbuteur respectif (451B, 451B') soit en contact avec un ressort respectif (43B, 43B'), chaque second bras de culbuteur respectif (452B, 452B') étant associé ou relié de manière opérationnelle à un palier respectif (47B, 47B') agencé sur un arbre de palier respectif (48B, 48B') axialement parallèle à l'arbre de direction (2B), chacun desdits paliers (47B, 47B') étant agencé pour interagir avec un profil de came respectif ou une surface de came respective parmi lesdits profils de came ou lesdites surfaces de came (21B, 21B'), de sorte que lorsque l'arbre de direction (2B) est mis en rotation, une surface de came respective (21B, 21B') agisse sur un palier respectif (47B, 47B'), agissant sur le bras de culbuteur interne respectif (452B, 452B'), de sorte que l'agencement à culbuteur (45B, 45B') tourne autour de l'arbre de pivotement (46B, 46B') et le ressort respectif (43B, 43B') soit actionné par le premier bras de culbuteur externe respectif (451B, 451B') et vice versa.

15. Véhicule comprenant un système de direction filaire ou sans fil selon l'une quelconque des revendications 4 à 13,
**caractérisé en ce que**
il s'agit d'une voiture, d'un bus, d'un camion, d'un aéronef, d'un bateau, d'un véhicule télécommandable, d'un véhicule dans un simulateur ou dans un jeu d'ordinateur.
